# EUROPÄISCHE PATENTSCHRIFT

(11) **EP 1 028 270 B1**
(45) Veröffentlichungstag und Bekanntmachung des Hinweises auf die Patenterteilung: **25.06.2003**
(21) Anmeldenummer: 00102615.2
(22) Anmeldetag: 08.02.2000
(51) Int. Cl.: F16H 3/093

(54) **Automatisierbarer Antriebsstrang für ein Kraftfahrzeug**
Automatable drive train for vehicle
Train d'entraînement automatisable pour véhicule

(30) Priorität: 09.02.1999 DE 19905273
(43) Veröffentlichungstag der Anmeldung: 16.08.2000
(73) Patentinhaber: GETRAG Getriebe- und Zahnradfabrik Hermann Hagenmeyer GmbH & Cie KG, 74199 Untergruppenbach (DE)
(72) Erfinder: Leitermann, Wulf, 70806 Kornwestheim (DE)
(74) Vertreter: Steil, Christian, Dipl.-Ing.

(56) Entgegenhaltungen:
- EP-A- 0 173 117
- DE-A- 2 156 714
- DE-C- 967 545
- DE-C- 19 548 622
- PATENT ABSTRACTS OF JAPAN vol. 009, no. 191 (M-402), 7. August 1985 (1985-08-07) & JP 60 057033 A (AISHIN SEIKI KK), 2. April 1985 (1985-04-02)

## Beschreibung

Die vorliegende Erfindung betrifft einen automatisierbaren Antriebsstrang für ein Kraftfahrzeug, mit einer einzelnen zum Anfahren geeigneten Reibungskupplung, deren Eingangsglied mit einer Ausgangswelle eines Antriebsmotors drehfest verbunden ist, und einem Stufengetriebe, das eine Mehrzahl von N Radsätzen entsprechend einer Mehrzahl von N Gangstufen, eine erste Getriebeeingangswelle, die mit der Ausgangswelle des Antriebsmotors drehfest verbunden ist, eine zweite Getriebeeingangswelle, die als Hohlwelle ausgebildet und mit dem Ausgangsglied der Reibungskupplung verbunden ist, eine Vorgelegewelle und eine Getriebeausgangswelle aufweist, wobei an der zweiten Getriebeeingangswelle ein Rad eines Radsatzes zur Zugkraftunterstützung gelagert ist, der mit der Getriebeausgangswelle in Verbindung bringbar ist, und wobei ein weiteres Rad des Radsatzes zur Zugkraftunterstützung an einer von der Vorgelegewelle getrennten Nebenwelle gelagert ist, die mit der Getriebeausgangswelle in Verbindung steht oder in Verbindung bringbar ist.

Ein solcher gattungsgemäßer Antriebsstrang ist aus Patent Abstracts of Japan, vol. 009, no. 191, (M-40 2), 7. August 1985, Korrespondiert zum Dokument JP60057033A, bekannt.

Bei einem aus der DE-A-40 31 851 bekannten Antriebsstrang ist eingangsseitig nur eine einzige Reibungskupplung vorhanden. Eine Ausgangswelle des Antriebsmotors ist drehfest mit einer Getriebeeingangswelle verbunden, auf der eine Mehrzahl von Rädern von Radsätzen angeordnet ist. Die Reibungskupplung verbindet ein Schwungrad der Ausgangswelle des Antriebsmotors mit einer konzentrisch zu der Getriebeeingangswelle vorgesehenen Hohlwelle, an der Festräder von weiteren Radsätzen festgelegt sind. An der Hohlwelle sind neben dem höchsten Gang noch Festräder des ersten Ganges und des Rückwärtsganges angeordnet. Die jeweiligen zweiten Räder der Radsätze sind an einer Vorgelegewelle gelagert, die für den Quereinbau im Kraftfahrzeug auch Getriebeausgangswelle ist. Somit ist es bei diesem Getriebe nicht nur möglich, bei Gangwechseln 1-2, 2-3, 3-4 im Zugbetrieb über den höchsten (5.) Gang ein Drehmoment auf die Abtriebswelle des Getriebes zu übertragen, was vorliegend unter dem Begriff "Zugkraftunterstützung" geführt wird. Darüber hinaus ist es durch die an der Hohlwelle angeordnete erste Gangstufe auch im Schubbetrieb möglich, eine Schubkraftunterstützung durchzuführen.

Von Vorteil bei diesem Getriebe ist, daß nur geringe bauliche Änderungen an herkömmlichen Handschaltgetrieben notwendig sind, insbesondere keine zusätzliche Kupplung erforderlich ist. Von Nachteil ist bei diesem Getriebe jedoch, daß der 1. Gang und der 5. Gang gemeinsam auf der mit der Kupplung verbundenen Hohlwelle angeordnet sind. Denn hierdurch tritt zu Beginn eines Gangwechsel vom 1. in den 2. Gang aufgrund des erforderlichen Ausrückens der Kupplung eine kurzfristige Zugkraftunterbrechung auf, die zu einem unerwünschten Hochdrehen des Antriebsmotors führen kann.

Aus der DE-C-195 48 622 ist ein weiteres Stufengetriebe für Kraftfahrzeuge mit Zugkraftunterstützung bekannt. Bei diesem Getriebe handelt es sich um ein Dreifach-Kupplungsgetriebe. Neben einer Reibungskupplung, die zwischen der Ausgangswelle des Antriebsmotors und dem Stufengetriebe angeordnet ist, sind eine Klauenkupplung und eine Synchronkupplung vorgesehen.

Die Klauenkupplung dient zum Verbinden der Ausgangswelle des Antriebsmotors mit einer Getriebehauptwelle (erste Getriebeeingangswelle), an der im wesentlichen Festräder der Gänge 1 bis 4 angeordnet sind. Die entsprechenden Losräder sind an einer Vorgelegewelle angeordnet, die als Ausgangswelle des Stufengetriebes dient. Das Ausgangselement der Reibungskupplung ist mit einer Getriebehohlwelle drehfest verbunden. Die Getriebehohlwelle ist über eine Synchronkupplung entweder mit der Getriebehauptwelle verbindbar oder mit einem an einer zweiten Getriebeeingangswelle gelagerten Losrad des 5. Ganges. Durch diese sehr spezielle Anordnung kann im Gegensatz zu dem Getriebe der DE-A-40 31 851 vermieden werden, daß beim Wechsel vom 1. in den 2. Gang eine Zugkraftunterbrechung auftritt. Der aus der DE-C-195 48 622 bekannte Antriebsstrang ist jedoch nur für den Quereinbau in Kraftfahrzeugen ausgelegt.

Ein weiteres Getriebe mit Zugkraftunterstützung ist aus der EP-B-0 173 117 bekannt. Bei diesem Getriebe ist zwischen den Antriebsmotor des Kraftfahrzeuges und das Stufengetriebe keine Trennkupplung geschaltet. Zur Zugkraftunterstützung ist dem höchsten Gang eine fluidisch betätigbare Reibungskupplung zugeordnet. Diese Kupplung muß jedoch außerordentlich groß dimensioniert sein, da Anfahrvorgänge aufgrund der fehlenden Trennkupplung ausschließlich im höchsten (5.) Gang erfolgen können, bei entsprechend hohen Reibungsverlusten.

Schließlich ist aus der DE-A-44 01 812 ein Antriebsstrang mit einer Doppelkupplung in Form von zwei baulich vereinigten Reibungskupplungen bekannt. Die eine der zwei Reibungskupplungen ist mit einer an sich herkömmlichen Getriebeeingangswelle eines im wesentlichen ebenfalls herkömmlichen Stufengetriebes in Vorgelegebauweise verbunden. Die andere Trennkupplung ist über einen kurzen Hohlwellenabschnitt mit einem auf der Getriebeeingangswelle gelagerten Losrad für den höchsten Gang verbunden.

Der höchste Gang ist somit als zuschaltbare Getriebestufe ausgeführt, um Gangwechsel in unteren Gängen mit Zugkraftunterstützung durchführen zu können.

In Abgrenzung zu Antriebssträngen mit Zugkraftunterstützung sind noch die sogenannten Doppelkupplungsgetriebe bekannt, z.B. aus der DE-PS 967 545, der DE 38 22 330 C2 oder der DE-C-38 12 327. Bei solchen Doppelkupplungsgetrieben sind zwei parallele Kraftübertragungszweige vorhanden. Bei einer überwiegenden Anzahl von Gangwechseln wird das Antriebsmoment jeweils von einem Zweig auf den anderen Zweig übergeben. Bei geeigneter Ansteuerung der eingangsseitigen Trennkupplungen und der Schaltkupplungen des Getriebes lassen sich Gangwechsel ohne jeden Zugkrafteinbruch durchführen. Solche Doppelkupplungsgetriebe sind jedoch konstruktiv außerordentlich aufwendig und schwierig zu steuern.

Vor diesem Hintergrund besteht die der Erfindung zugrunde liegende Aufgabe darin, einen automatisierbaren Antriebsstrang der eingangs genannten Art so weiterzubilden, daß das Getriebe in radialer Richtung kompakt ausgebildet ist.

Diese Aufgabe wird bei dem eingangs genannten Antriebsstrang dadurch gelöst, daß das an der zweiten Getriebeeingangswelle gelagerte Rad ein Losrad ist.

Bei dem erfindungsgemäßen Antriebsstrang sind ein Anfahren des Kraftfahrzeuges in einem niedrigen Gang und Zugkraftunterstützungen bei allen Gangwechseln unterhalb eines Überbrückungsganges mit einem Stufengetriebe in Standardbauweise und nur einer eingangsseitigen Reibungskupplung möglich sind.

Durch den Gedanken, das weitere Rad des Radsatzes zur Zugkraftunterstützung an einer von der Vorgelegewelle getrennten Nebenwelle zu lagern, ist es möglich, parallel zu den Getriebeeingangswellen über die Nebenwelle Antriebsmoment von dem Antriebsmotor direkt auf die Getriebeausgangswelle zu übertragen. Somit ist es möglich, die Getriebeausgangswelle gemäß der üblichen Standardbauweise bei Längseinbau des Antriebsstranges mit der Ausgangswelle des Antriebsmotors auszurichten.

Durch die Maßnahme, daß das an der zweiten Getriebeeingangswelle gelagerte Rad ein Losrad ist, ist es möglich, den Radsatz zur Zugkraftunterstützung mittels einer Schaltkupplung zuzuschalten, die an einer der Getriebeeingangswellen gelagert ist. Mit anderen Worten ist es nicht notwendig, an der Nebenwelle eine Schaltkupplung vorzusehen. Das Getriebe kann daher trotz der Nebenwelle in radialer Richtung kompakt ausgebildet werden.

Die Aufgabe wird auf diese Weise vollkommen gelöst.

Dabei ist es besonders bevorzugt, wenn das an der zweiten Getriebeeingangswelle gelagerte Losrad mittels einer ersten Schaltkupplung mit der zweiten Getriebeeingangswelle drehfest verbindbar ist und wenn ferner die Vorgelegewelle des Stufengetriebes mittels dieser ersten Schaltkupplung mit der zweiten Getriebeeingangswelle verbindbar ist.

Auf diese Weise wird erreicht, daß mit nur einer Schaltkupplung, nämlich der ersten Schaltkupplung, die zweite Getriebeeingangswelle alternativ mit der Nebenwelle oder der Vorgelegewelle verbindbar ist.

Hierdurch ist es möglich, mittels der Reibungskupplung im 1. Gang anzufahren, wobei die erste Schaltkupplung die zweite Getriebeeingangswelle mit der Vorgelegewelle - und damit mit dem Radsatz für den 1. Gang - verbindet.

Gemäß einer weiteren bevorzugten Ausführungsform ist an der ersten Getriebeeingangswelle ein Rad eines Konstanten-Radsatzes gelagert, das mit einem an der Vorgelegewelle gelagerten Rad kämmt.

Durch diese Maßnahme wird erreicht, daß das Antriebsmoment von dem Antriebsmotor über die Ausgangswelle des Antriebsmotors und die erste Getriebeeingangswelle auf die Vorgelegewelle des Stufengetriebes übertragen werden kann. Dabei ist es bevorzugt, wenn das Rad des Konstanten-Radsatzes als Losrad ausgebildet ist und wenn an der ersten Getriebeeingangswelle eine zweite Schaltkupplung gelagert ist, um das Losrad drehfest mit der ersten Getriebeeingangswelle zu verbinden.

Hierdurch ist es vorteilhafterweise zum einen möglich, die Vorgelegewelle und damit die Radsätze der Mehrzahl von N Gängen von der Ausgangswelle des Antriebsmotors zu entkoppeln. Zum anderen ist es bei dieser Anordnung möglich, die Vorgelegewelle ohne Schaltkupplungen auszubilden, so daß das Getriebe in radialer Richtung kompakt konstruiert werden kann.

Besonders bevorzugt ist es dabei, wenn die erste und die zweite Schaltkupplung axial an gegenüberliegenden Seiten des Losrades des Konstanten-Radsatzes angeordnet sind.

Auf diese Weise ist es auch in axial kompakter Bauweise möglich, die Vorgelegewelle sowohl mit der ersten Getriebeeingangswelle als auch der zweiten Getriebeeingangswelle zu verbinden. Bei vollständig eingerückter Reibungskupplung laufen die zwei Getriebeeingangswellen mit der gleichen Drehzahl, so daß in diesem Zustand auch beide Schaltkupplungen mit dem Losrad des Konstanten-Radsatzes verbunden sein können. Dies kann nun ausgenutzt werden, um nach dem Einlegen des 1. Ganges und dem Anfahren über die Reibungskupplung und die zweite Getriebeeingangswelle das Antriebsmoment über die zweite Synchronkupplung auf die erste Getriebeeingangswelle zu übernehmen. In der Folge kann die erste Schaltkupplung somit von dem Losrad des Konstanten-Radsatzes getrennt und die Reibungskupplung geöffnet werden. In diesem Zustand kann dann über die erste Schaltkupplung der Radsatz zur Zugkraftunterstützung bei allen folgenden Gangwechseln über die eingangsseitig angeordnete Reibungskupplung zum Einsatz kommen.

Gemäß einer weiteren bevorzugten Ausführungsform ist die erste Schaltkupplung zwischen den Losrädern des Radsatzes zur Zugkraftunterstützung bzw. des Konstanten-Radsatzes angeordnet.

Hierdurch kann der Antriebsstrang in axialer Richtung besonders kompakt ausgebildet werden.

Besonders bevorzugt ist es, wenn ein Radsatz für den höchsten, den zweithöchsten oder den dritthöchsten Gang die Nebenwelle mit der Getriebeausgangswelle verbindet.

Hierdurch kann ein relativ hoher Gang zur Zugkraftunterstützung bei Gangwechseln in allen darunter liegenden Gängen verwendet werden. Je höher der Gang des Radsatzes ist, desto mehr Gangwechsel können mit Zugkraftunterstützung durchgeführt werden. Je niedriger der Gang dieses Radsatzes ist, desto höher ist das bei der Zugkraftunterstützung übertragbare Drehmoment. Vorteilhaft ist ferner, daß für den Radsatz für den höchsten, den zweithöchsten oder den dritthöchsten Gang an der Getriebeausgangswelle dann keine separate Schaltkupplung mehr vorgesehen werden muß. Hierdurch kann das Stufengetriebe - und somit der Antriebsstrang - axial kompakt ausgebildet werden.

Dabei ist es besonders bevorzugt, wenn die Nebenwelle mit der Getriebeausgangswelle durch einen Radsatz für den höchsten Gang, insbesondere den 5. Gang, verbunden ist.

Gemäß einer weiteren bevorzugten Ausführungsform ist der Radsatz für den höchsten, den zweithöchsten oder den dritthöchsten Gang benachbart zu der zweiten Schaltkupplung angeordnet.

Hierdurch kann die Nebenwelle axial kurz und damit gewichtsparend ausgebildet werden.

Gemäß einer alternativen bevorzugten Ausführungsform ist die Nebenwelle mittels zumindest zweier Radsätze mit der Getriebeausgangswelle verbindbar.

Vorteilhaft an dieser Ausführungsform ist, daß eine Zugkraftunterstützung nicht nur durch einen Gang erfolgt, sondern durch zwei unterschiedliche Gänge, so daß es gleichzeitig möglich ist, eine Mehrzahl von Gangwechseln mit Zugkraftunterstützung durchzuführen und die Zugkraftunterstützung bei Gangwechseln in den unteren Gängen mit einem hohen Moment bereitzustellen. Für Rückschaltungen gilt, daß eine Zugkraftunterstützung dann möglich ist, wenn der einzulegende Gang größer oder gleich dem jeweiligen Gang auf der Nebenwelle ist.

Dabei ist es besonders bevorzugt, wenn die zwei Radsätze den höchsten und den dritthöchsten Gang darstellen.

Besonders bevorzugt ist es, wenn die zwei Radsätze den höchsten Gang und den 3. Gang darstellen.

Bei dieser Ausführungsform wird erreicht, daß kein Gangwechsel ohne Zugkraftunterstützung durchgeführt wird und daß bei den Gangwechseln 1-2 und 2-3 ein vergleichsweise hohes Moment, nämlich das Moment des dritthöchsten oder des 3. Ganges zur Zugkraftunterstützung bereitgestellt wird.

Vorzugsweise sind die Radsätze über eine an der Nebenwelle gelagerte dritte Schaltkupplung alternativ mit der Getriebeausgangswelle verbindbar.

Durch das Vorsehen einer Schaltkupplung an der Nebenwelle wird erreicht, daß die Radsätze an der Getriebeausgangswelle Festräder besitzen können.

Dies führt zu einer größeren Flexibilität des Getriebes.

So ist es bspw. ferner bevorzugt, wenn wenigstens einer der zwei Radsätze ein weiteres Losrad aufweist, das an der Vorgelegewelle gelagert und mittels einer vierten Schaltkupplung mit der Vorgelegewelle drehfest verbindbar ist.

Durch diese Maßnahme kann dann, wenn bei einem Gangwechsel in den Gang des betreffenden Radsatzes das Drehmoment vollkommen von der Nebenwelle übernommen ist, über die vierte Schaltkupplung die Nebenwelle wieder entlastet werden, so daß bei folgenden Gangwechseln wieder Zugkraftüberbrückungen möglich sind.

Ferner ist es bevorzugt, wenn eine Steuervorrichtung zur servomechanischen Ansteuerung von Kupplungen des Antriebsstranges und gegebenenfalls zur Beeinflussung des Antriebsmotors vorgesehen ist.

Durch eine solche Steuervorrichtung ist der Antriebsstrang teilweise oder vollständig automatisch ausgebildet und eignet sich daher insbesondere als Ersatz für herkömmliche Automatikgetriebe, und zwar insbesondere aufgrund des höheren Wirkungsgrades wegen Wegfalls des hydrodynamischen Wandlers.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine schematische Darstellung eines Kraftfahrzeug-Antriebsstranges gemäß einer Ausführungsform der Erfindung;
- Fig. 2: eine Zustandstabelle der jeweiligen Kupplungen des Antriebsstranges der Fig. 1;
- Fig. 3: in schematischer Darstellung den Drehmomentverlauf an der Getriebeausgangswelle für alle Schaltvorgänge über der Zeit;
- Fig. 4: eine schematische Darstellung eines Kraftfahrzeug-Antriebsstranges gemäß einer weiteren Ausführungsform der Erfindung; und
- Fig. 5: eine Zustandstabelle der jeweiligen Kupplungen des Antriebsstranges der Fig. 4; und
- Fig. 6: in schematischer Darstellung den Drehmomentverlauf an der Getriebeausgangswelle für alle Schaltbedingungen über der Zeit bei dem Antriebsstrang der Fig. 4.

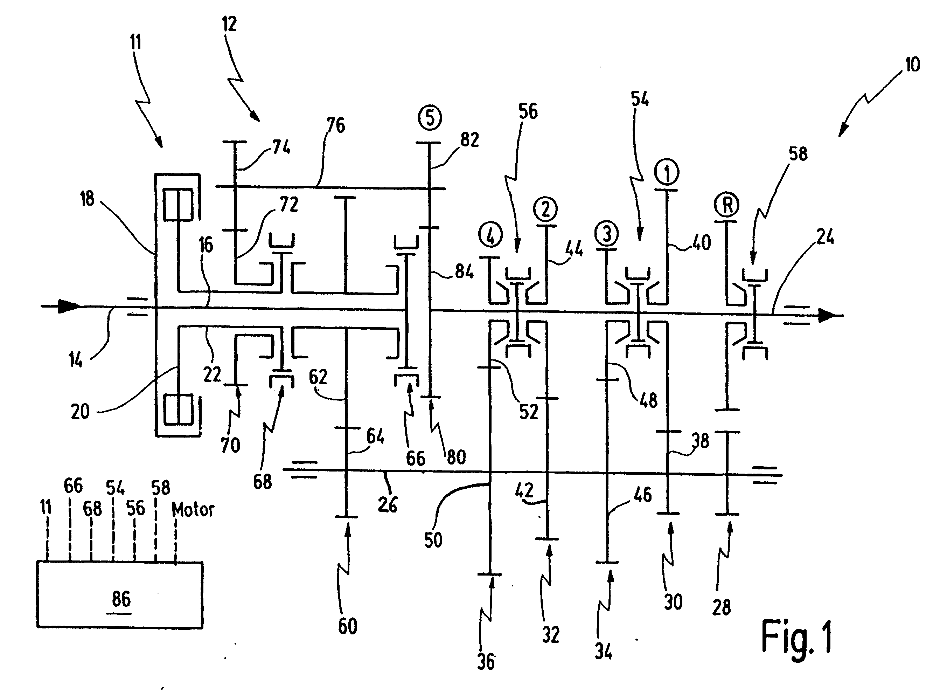

In Fig. 1 ist ein Antriebsstrang eines Kraftfahrzeuges generell bei 10 gezeigt.

Der Antriebsstrang 10 umfaßt eine einzelne Reibungskupplung 11 und ein Stufengetriebe 12.

Eine Ausgangswelle 14 eines Antriebsmotors ist direkt drehfest mit einer ersten Getriebeeingangswelle 16 verbunden sowie mit einem Eingangsglied 18 der Reibungskupplung 11. Ein Ausgangsglied 20 der Reibungskupplung 11 ist mit einer zweiten hohlen Getriebeeingangswelle 22 drehfest verbunden.

Das Stufengetriebe 12 umfaßt eine Getriebeausgangswelle 24, die axial mit der ersten Getriebeeingangswelle 16 und mit der Ausgangswelle 14 des Antriebsmotors ausgerichtet ist, sowie eine parallel hierzu angeordnete Vorgelegewelle 26.

Das Stufengetriebe 12 umfaßt ferner Radsätze 28, 30, 32, 34, 36 für einen Rückwärtsgang und Vorwärtsgänge 1 bis 4. Die Radsätze sind von der Ausgangsseite des Stufengetriebes 12 in der Reihenfolge 28, 30, 34, 32, 36 angeordnet. Der Radsatz 30 des 1. Ganges umfaßt ein mit der Vorgelegewelle 26 verbundenes Festrad 38 und ein an der Getriebeausgangswelle 24 gelagertes Losrad 40.

Der Radsatz 32 für den 2. Gang umfaßt ein mit der Vorgelegewelle 26 verbundenes Festrad 42 sowie ein an der Getriebeausgangswelle 24 gelagertes Losrad 44.

Der Radsatz 34 für den 3. Gang umfaßt ein an der Vorgelegewelle 26 festgelegtes Festrad 46 und ein an der Getriebeausgangswelle 24 gelagertes Losrad 48.

Der Radsatz 36 für den 4. Gang umfaßt ein mit der Vorgelegewelle 26 verbundenes Festrad 50 und ein an der Getriebeausgangswelle 24 gelagertes Losrad 52.

Eine erste Gangschaltkupplung 54 ist zwischen den Losrädern 40 und 48 des 1. bzw. des 3. Ganges an der Getriebeausgangswelle 24 angeordnet und dient zum wahlweisen Verbinden dieser Losräder mit der Getriebeausgangswelle 24.

Eine zweite Gangschaltkupplung 56 ist zwischen den Losrädern 44, 52 des 2. bzw. des 4. Ganges an der Getriebeausgangswelle 24 angeordnet und dient zum wahlweisen Verbinden dieser Losräder 44, 52 mit der Getriebeausgangswelle 24.

Zwischen der Ausgangsseite des Stufengetriebes 12 und dem Radsatz 28 ist an der Getriebeausgangswelle 24 eine dritte Gangschaltkupplung 58 angeordnet, mit der ein an der Getriebeausgangswelle gelagertes Losrad des Radsatzes 28 mit der Getriebeausgangswelle 24 verbindbar ist.

Die Räder des Radsatzes 28 für den Rückwärtsgang sind in der Figur nicht näher bezeichnet, umfassen jedoch in üblicher Weise ein Rad zur Drehrichtungsumkehr.

Die drei Gangschaltkupplungen 54, 56, 58 sind als Synchronkupplungen ausgebildet. Wenn geeignete Mittel zur Zentralsynchronisierung vorgesehen sind, können statt der Synchronkupplungen auch Klauenkupplungen Verwendung finden.

Ferner versteht sich, daß die Radsätze 28 bis 36 auch so aufgebaut sein können, daß jeweilige Losräder an der Vorgelegewelle 26 und jeweilige Festräder an der Getriebeausgangswelle 24 angeordnet sind. In diesem Fall würden die Gangschaltkupplungen entsprechend an der Vorgelegewelle vorgesehen werden.

Ein Radsatz 60 dient zum Verbinden der ersten Getriebeeingangswelle 16 mit der Vorgelegewelle 26. Der Radsatz 60 ist ein Konstanten-Radsatz und umfaßt ein an der ersten Getriebeeingangswelle 16 gelagertes Losrad 62 sowie ein hiermit kämmendes, drehfest an der Vorgelegewelle 26 gelagertes Festrad 64. Vom Eingang des Stufengetriebes 12 aus gesehen, ist die erste Getriebeeingangswelle 16 endseitig mit einer ersten Schaltkupplung 66 versehen. Die erste Schaltkupplung 66 dient zum Verbinden der ersten Getriebeeingangswelle 16 mit der Vorgelegewelle 26 oder zum Trennen dieser beiden Wellen. Dabei ist die erste Schaltkupplung 66 vom Eingang des Stufengetriebes 12 her gesehen hinter dem Losrad 62 angeordnet.

In der gleichen Blickrichtung ist vor dem Losrad 62 eine zweite Schaltkupplung 68 vorgesehen. Die zweite Schaltkupplung 68 ist an der zweiten Getriebeeingangswelle 22 gelagert. Sie dient dazu, entweder das Losrad 62 mit der zweiten Getriebeeingangswelle 22 zu verbinden oder dazu, die zweite Getriebeeingangswelle 22 mit einem weiteren Losrad 72 eines Radsatzes 70 zur Zugkraftunterstützung zu verbinden.

Der Radsatz 70 zur Zugkraftunterstützung umfaßt neben dem drehbar an der zweiten Getriebeeingangswelle 22 gelagerten Losrad 72 ein Festrad 74, das drehfest mit einer parallel zu den Getriebeeingangswellen 16, 22 und zu der Getriebeausgangswelle 24 und der Vorgelegewelle 26 angeordneten Nebenwelle 76 verbunden ist.

Der Radsatz 70 zur Zugkraftunterstützung ist benachbart zu der Reibungskupplung 11 angeordnet. Die Nebenwelle 76 erstreckt sich von dem Radsatz 70 zur Zugkraftunterstützung bis zu einem weiteren Radsatz 80 für den 5. Gang des Stufengetriebes 12. Der Radsatz 80 für den 5. Gang umfaßt ein drehfest mit der Nebenwelle 76 verbundenes Festrad 82 und ein mit der Getriebeausgangswelle 24 drehfest verbundenes Festrad 84. Der Radsatz 80 ist, gesehen von der Eingangsseite des Antriebsstranges 10, direkt hinter der ersten Schaltkupplung 66 angeordnet, also am Anfang der Getriebeausgangswelle 24. Das Festrad 84 ist dabei benachbart zu dem Losrad 52 für den 4. Gang angeordnet.

Zusammenfassend sind in axialer Richtung ausgehend von der Ausgangswelle des Antriebsmotors 14 folgende Elemente in dem Antriebsstrang vorgesehen: Reibungskupplung 11, Radsatz 70, zweite Schaltkupplung 68, Radsatz 60, erste Schaltkupplung 66, Radsatz 80 sowie Radsätze 36, 32, 34, 30, 28.

In Fig. 1 ist ferner schematisch eine Steuervorrichtung 86 gezeigt, die zur automatischen Betätigung des Antriebsstranges 10 mit schematisch angedeuteten Aktuatoren für die Elemente 11, 66, 68, 54, 56, 58 sowie gegebenenfalls mit Elementen zur Beeinflussung des Antriebsmotors verbunden ist.

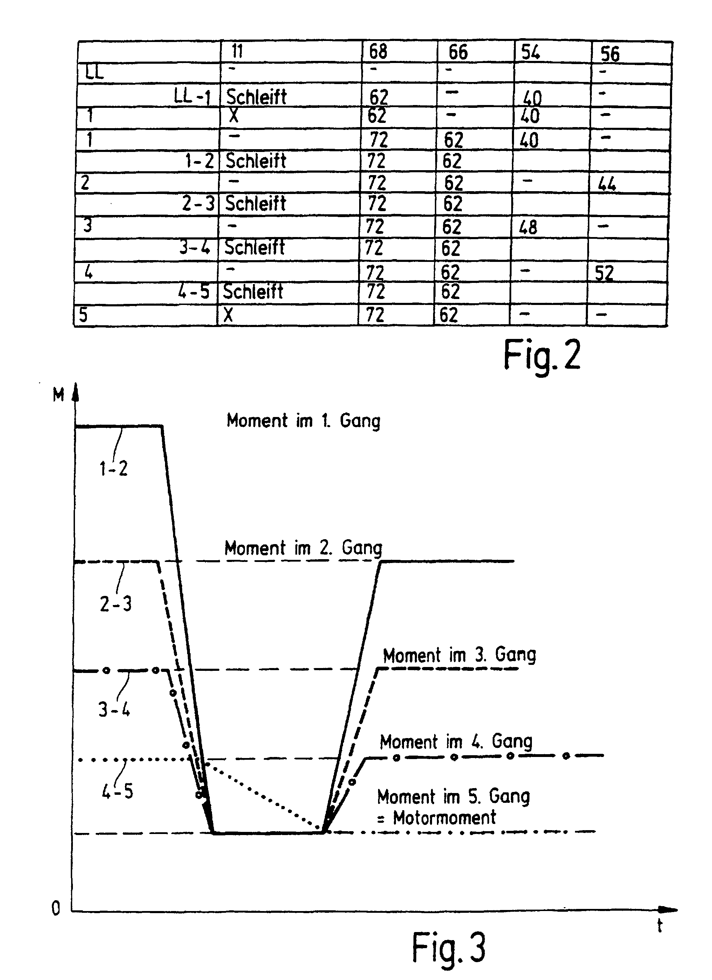

Die Funktionsweise des in Fig. 1 gezeigten Antriebsstranges wird nachfolgend anhand von Fig. 2 erläutert. Fig. 2 zeigt die Zustände der Kupplungen 11, 68, 66, 54, 56 in den Zuständen Leerlauf (LL), bei eingelegten Gängen 1, 2, 3, 4, 5, beim Anfahren (LL-1) sowie bei Gangwechseln 1-2, 2-3, 3-4, 4-5.

Im Leerlauf, also bei Trennung des Antriebsstranges 10 von dem Antriebsmotor, ist keine der Kupplungen 11, 68, 66, 54, 56 betätigt.

Vor dem Anfahren wird die erste Gangschaltkupplung 54 betätigt, um die Getriebeausgangswelle 24 mit dem Losrad 40 des Radsatzes 30 für den 1. Gang zu verbinden. Ferner wird die zweite Schaltkupplung 68 mit dem Losrad 62 verbunden, um die zweite Getriebeeingangswelle 22 mit der Vorgelegewelle 26 und damit mit dem Radsatz 30 für den 1. Gang zu verbinden. Anschließend wird zum Anfahren die Reibungskupplung 11 allmählich, also zunächst schleifend, eingerückt. Sobald das Eingangselement 18 der Reibungskupplung 11 drehfest mit dem Ausgangselement 20 der Reibungskupplung 11 verbunden ist, fährt das Fahrzeug im 1. Gang, wobei der Kraftfluß über die Reibungskupplung 11, die zweite Getriebeeingangswelle 22, den Radsatz 60, die Vorgelegewelle 26, den Radsatz 30 und die Getriebeausgangswelle 24 verläuft. In diesem Zustand dreht sich aufgrund der drehfesten Verbindung zwischen Ausgangswelle des Antriebsmotors 14 und erster Getriebeeingangswelle 16 die erste Schaltkupplung 66 synchron mit dem Losrad 62. Daher kann während des Fahrens im 1. Gang die erste Schaltkupplung 66 mit dem Losrad 62 verbunden werden und anschließend die zweite Schaltkupplung 68 von dem Losrad 62 getrennt werden. Anschließend kann nach einem Ausrücken der Reibungskupplung 11 die zweite Schaltkupplung 68 mit dem Losrad 72 des Radsatzes 70 zur Zugkraftunterstützung verbunden werden, wie es in Fig. 2 gezeigt ist. Somit läuft der Kraftfluß in der Folge von der Ausgangswelle 14 des Antriebsmotors über die erste Getriebeeingangswelle 16, die erste Schaltkupplung 66, den Radsatz 60, die Vorgelegewelle 26, den Radsatz 30 und die erste Gangschaltkupplung 54 auf die Getriebeausgangswelle 24.

Bei einem Gangwechsel vom 1. in den 2. Gang wird die erste Gangschaltkupplung 54 von dem Losrad 40 des Radsatzes 30 für den ersten Gang getrennt, und die zweite Gangschaltkupplung 56 wird anschließend, nach Erreichen der Synchrondrehzahl, mit dem Losrad 44 des Radsatzes 32 für den 2. Gang verbunden. Während der hierbei auftretenden Zugkraftunterbrechung in dem über den Radsatz 60 und die Vorgelegewelle 26 laufenden Zweig des Stufengetriebes 12 wird die Reibungskupplung 11 schleifend betätigt, so daß an der Ausgangswelle 14 des Antriebsmotors anstehendes Antriebsmoment zur Zugkraftunterstützung über die Reibungskupplung 11, die zweite Getriebeeingangswelle 22, die zweite Schaltkupplung 68, den Radsatz 70, die Nebenwelle 76 und den Radsatz 80 für den 5. Gang auf die Getriebeausgangswelle 24 gelegt wird. Aufgrund der Übersetzungsverhältnisse wird die Ausgangswelle 14 des Antriebsmotors hierbei abgebremst, so daß die zum Schalten der Gangschaltkupplung 56 erforderliche Synchrondrehzahl mit dem Losrad 44 des Radsatzes 32 für den 2. Gang schnell erreicht wird. Das Schließen der Reibungskupplung erfolgt vor dem Auslegen des 1. Ganges. Durch die Nebenwelle wird das Drehmoment am 1. Gang so weit reduziert, daß ein Auslegen des 2. Ganges überhaupt möglich ist.

Somit kann ein Schaltvorgang vom 1. in den 2. Gang ohne Zugkraftunterbrechung durchgeführt werden, nämlich mit Zugkraftunterstützung über den 5. Gang.

Die folgenden Gangwechsel 2-3, 3-4 laufen auf entsprechende Weise ab.

Beim Gangwechsel vom 4. in den 5. Gang wird der Kraftfluß, der ursprünglich über die Elemente 14, 16, 66, 60, 26, 36, 56, 24 verläuft, vollständig auf den Unterstützungszweig übergeben, wobei die zweite Gangschaltkupplung 56 von dem Losrad 52 getrennt wird. In Abstimmung hiermit wird durch allmähliches Einrücken der Reibungskupplung 11 das an der Ausgangswelle 14 des Antriebsmotors anstehende Drehmoment allmählich übernommen, bis der Kraftfluß nach Trennen der Kupplung 56 vollständig über die folgenden Elemente verläuft: 14, 18, 20, 22, 68, 70, 76, 80, 24.

Zusammenfassend kann mit dem Antriebsstrang 10 erreicht werden, daß bei allen Hochschaltungen unterhalb des Zugkraftunterstützungsganges (hier dem 5. Gang) eine Zugkraftunterstützung stattfindet. In qualitativer Hinsicht ist dies in Fig. 3 dargestellt. Das an der Getriebeausgangswelle 24 anstehende Moment M im 1. Gang fällt bei einem Gangwechsel vom 1. in den 2. Gang (1-2) aufgrund der Zugkraftunterstützung nicht auf Null ab, sondern nur bis auf das Moment im 5. Gang, also im wesentlichen das Motordrehmoment (bei angenommener direkter Übersetzung des 5. Ganges). Erst nach Einlegen des 2. Ganges und dem allmählichen Ausrücken der Reibungskupplung 11 steigt das Moment wieder an, schließlich auf das Moment im 2. Gang.

Die Gangwechsel 2-3, 3-4 erfolgen auf entsprechende Weise.

Beim Gangwechsel vom 4. in den 5. Gang erfolgt eine unmittelbare Übergabe des Drehmomentes von dem einen Zweig, der mit der ersten Getriebeeingangswelle 16 beginnt, auf den zweiten Zweig, der mit der zweiten Getriebeeingangswelle 22 beginnt, so daß kein Zugkrafteinbruch stattfindet. In Fig. 3 ist dies schematisch durch die Punkte dargestellt.

Es versteht sich, daß Fig. 3 lediglich qualitativ bzw. schematisch zu verstehen ist, daß also die zeitlichen Proportionen keineswegs richtig dargestellt sind. Die Darstellung des Momentes an der Getriebeausgangswelle 24 (M) ist ebenfalls nur schematisch zu verstehen; alle äußeren Faktoren, wie Motordrehmomentsänderungen, Fahrbahnsteigungen etc. sind unberücksichtigt gelassen.

Es versteht sich, daß als Überbrückungsgang anstelle des 5. Ganges auch auf einfache Art und Weise der 4. Gang herangezogen werden kann, wobei dann ein Radsatz für den 5. Gang über eine Gangschaltkupplung einlegbar sein sollte.

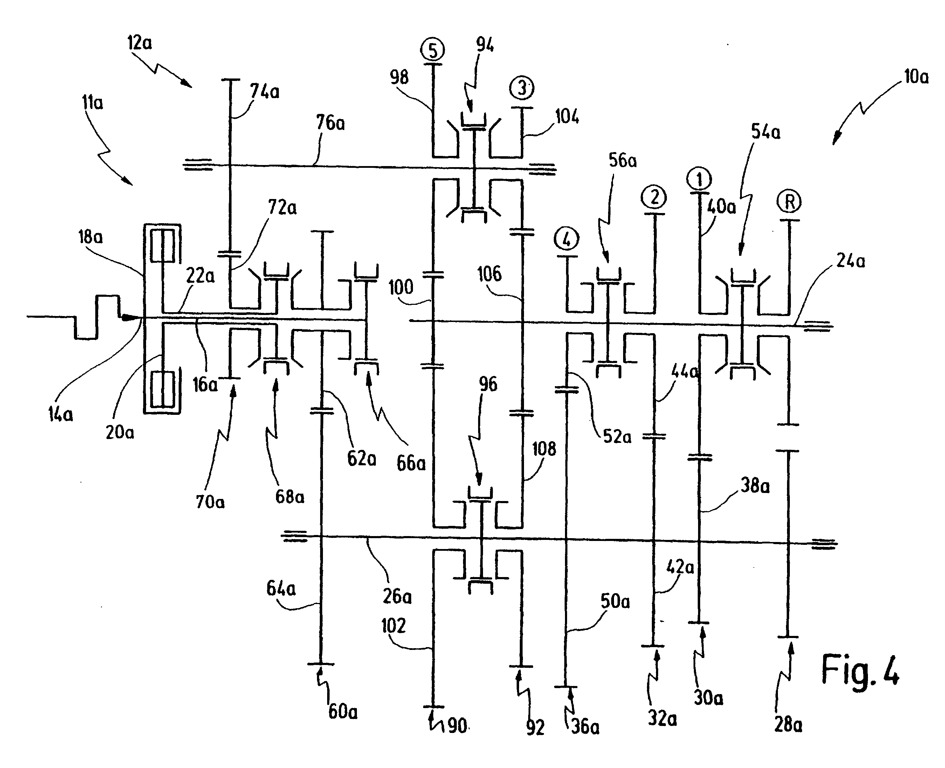

In Fig. 4 ist eine weitere Ausführungsform eines Antriebsstranges eines Kraftfahrzeuges generell bei 10a gezeigt.

Der grundlegende Aufbau des Antriebsstranges 10a entspricht dem des in Fig. 1 gezeigten Antriebsstranges 10. Elemente, die dieselbe Funktion besitzen wie bei dem Antriebsstrang 10 der Fig. 1, sind in Fig. 4 mit dem Suffix "a" gekennzeichnet. Es wird insoweit auf die Erläuterungen zu den entsprechenden Elementen ohne das Suffix "a" des Antriebsstranges 10 der Fig. 1 verwiesen.

Der Antriebsstrang 10a der Fig. 4 unterscheidet sich von dem Antriebsstrang 10 dadurch, daß statt des einen Radsatzes 80 für den 5. Gang zwei Radsätze 90, 92 für den 5. und 3. Gang vorgesehen sind, die zur Zugkraftunterstützung eingesetzt werden. Entsprechend ist bei dem Antriebsstrang 10a kein regulärer Radsatz 34 wie bei dem Antriebsstrang 10 der Fig. 1 vorgesehen.

Ferner ist zwischen den Radsätzen 90, 92 an der Nebenwelle 76a eine erste Umschaltkupplung 94 vorgesehen. Entsprechend ist an der Vorgelegewelle 26a zwischen den Radsätzen 90, 92 eine zweite Umschaltkupplung 96 vorgesehen.

Der Radsatz 90 für den 5. Gang umfaßt ein an der Nebenwelle 76a gelagertes Losrad 98, ein mit der Getriebeausgangswelle 24a drehfest verbundenes Festrad 100 und ein an der Vorgelegewelle 26a drehbar gelagertes Losrad 102. Entsprechend umfaßt der Radsatz 92 für den 3. Gang ein an der Nebenwelle 76a gelagertes Losrad 104, ein drehfest mit der Getriebeausgangswelle 24a verbundenes Festrad 106 und ein an der Vorgelegewelle 26a gelagertes Losrad 108.

Die erste Umschaltkupplung 94 dient dazu, entweder das Losrad 98 des 5. Ganges oder das Losrad 104 des 3. Ganges drehfest mit der Nebenwelle 76a zu verbinden. Die zweite Umschaltkupplung 96 in Form einer Klauenkupplung dient dazu, entweder das Losrad 102 des 5. Ganges oder das Losrad 108 des 3. Ganges mit der Vorgelegewelle 26a zu verbinden.

Der Antriebsstrang 10a ist im Unterschied zu dem Antriebsstrang 10 der Fig. 1 so konzipiert, daß eine Zugkraftunterstützung entweder mittels des 3. Ganges oder mittels des 5. Ganges erfolgen kann. In den unteren Gängen erfolgt die Zugkraftunterstützung mittels des 3. Ganges. Bei den oberen Gängen erfolgt die Zugkraftunterstützung mittels des 5. Ganges. Daher ist es möglich, bei Gangwechseln in den unteren Gängen ein höheres Drehmoment, nämlich das Drehmoment des 3. Ganges zur Zugkraftunterstützung bereitzustellen.

Zuzüglich hierzu ist es mit dem Antriebsstrang 10a möglich, die Gangwechsel vom 2. in den 3., vom 4. in den 5. und vom 4. in den 3. Gang als echte Lastschaltungen durchzuführen, entsprechend dem Gangwechsel 4-5 bei dem Antriebsstrang 10 der Fig. 1.

Die Gangschaltkupplung 54a für den ersten und den Rückwärtsgang ist als Synchronkupplung ausgebildet. Auch die erste Umschaltkupplung 94 ist als Synchronkupplung ausgebildet. Hingegen ist sowohl die Gangschaltkupplung 56a für den 2. und den 4. Gang als auch die zweite Umschaltkupplung 96 als Klauenkupplung ausgebildet.

Es versteht sich, daß auch der Antriebsstrang 10 mittels einer Steuervorrichtung entsprechend der Steuervorrichtung 86 des Antriebsstranges 10 automatisch betätigt werden kann.

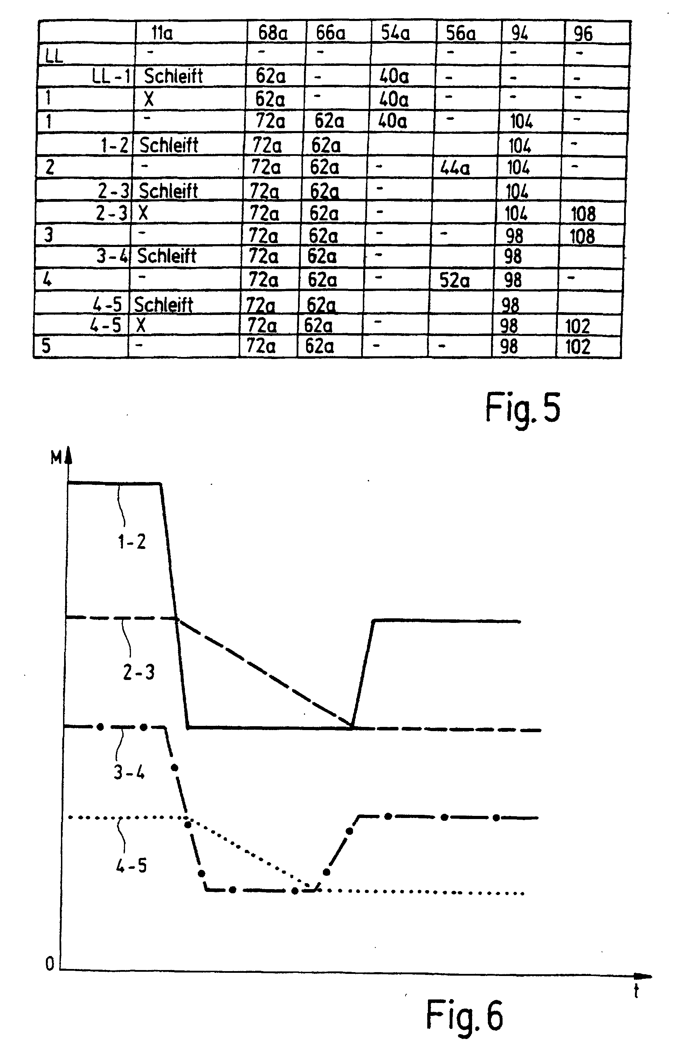

Die Funktionsweise des in Fig. 4 gezeigten Antriebsstranges 10a wird nachfolgend anhand von Fig. 5 erläutert. Fig. 5 zeigt die Zustände der Kupplungen 11a, 68a, 66a, 54a, 56a, 94, 96 in den Zuständen Leerlauf (LL), bei eingelegten Gängen 1, 2, 3, 4, 5, beim Anfahren (LL-1) sowie bei Gangwechseln 1-2, 2-3, 3-4, 4-5.

Die Funktionsweise des Antriebsstranges 10 ist beim Anfahren gleich der Funktionsweise des Antriebsstranges 10 der Fig. 1. Zuzüglich wird die erste Umschaltkupplung 94 im ersten Gang betätigt, um das Losrad 104 des 3. Ganges mit der Nebenwelle 76a zu verbinden, sobald die Reibungskupplung 11a geöffnet ist.

Der Gangwechsel vom 1. in den 2. Gang entspricht dann dem Gangwechsel des Antriebsstranges 10 der Fig. 1, wobei jedoch zur Zugkraftunterstützung das Moment des 3. Ganges über die Nebenwelle 76a und den Radsatz 92 auf die Getriebeausgangswelle 24a gelegt wird.

Im Unterschied zu dem Antriebsstrang 10 erfolgt der Gangwechsel vom 2. in den 3. Gang unter unmittelbarer Übergabe des Drehmomentes von dem einen Zweig, der mit der ersten Getriebeeingangswelle 16a beginnt, auf dem zweiten Zweig, der mit der zweiten Getriebeeingangswelle 22a beginnt, so daß überhaupt kein Zugkrafteinbruch stattfindet. Zusätzlich wird sofort nachdem das Drehmoment vollkommen auf dem zweiten Zweig übernommen ist, die zweite Umschaltkupplung 96 betätigt, um das Losrad 108 mit der Vorgelegewelle 26a zu verbinden. Hierbei wird das Moment im 3. Gang wieder auf den ersten Zweig übergeben, so daß die Reibungskupplung 11a anschließend im dritten Gang geöffnet werden kann. Da die Nebenwelle 76a folglich lastfrei ist, kann dann im 3. Gang die erste Umschaltkupplung 94 auf das Losrad 98 für den 5. Gang umgeschaltet werden. Folglich kann bei einem folgenden Gangwechsel vom 3. in den 4. Gang eine Zugkraftunterstützung durch das Moment des 5. Ganges erfolgen. Sobald bei dieser Zugkraftunterstützung die zweite Umschaltkupplung 96 kein Moment oder nur ein geringes Moment übertragen muß, wird die zweite Umschaltkupplung 96 betätigt, um das Losrad 108 von der Vorgelegewelle 26a zu trennen.

Ein Gangwechsel vom 4. in den 5. Gang erfolgt analog wie ein Gangwechsel vom 2. in den 3. Gang, wobei jedoch nunmehr die zweite Umschaltkupplung 96 betätigt wird, um das Losrad 102 des 5. Ganges nach erfolgter Momentenübernahme mit der Vorgelegewelle 26a zu verbinden.

Man erkennt, daß bei dem Antriebsstrang 10a es möglich ist, im ersten Gang anzufahren, bei dem Gangwechsel von 1 nach 2 eine Zugkraftunterstützung über das Moment des 3. Ganges zu erhalten, den Gangwechsel von 2 nach 3 als Lastschaltung ohne jeden Zugkrafteinbruch durchzuführen, den Gangwechsel von 3 nach 4 mit Zugkraftunterstützung durch das Moment des 5. Ganges durchzuführen und schließlich den Gangwechsel von 4 nach 5 wieder als Lastschaltung ohne jeden Drehmomenteinbruch durchzuführen.

Dieser Sachverhalt ist in Fig. 6 dargestellt, die der Fig. 3 entspricht.

Aufgrund der axialen Ausrichtung von Ausgangswelle 14 des Antriebsmotors und Getriebeausgangswelle 24 eignen sich die Antriebsstränge 10, 10a besonders für den Standardeinbau in Kraftfahrzeugen in Längsbauweise.

## Patentansprüche

1. Automatisierbarer Antriebsstrang (10) für ein Kraftfahrzeug, mit einer einzelnen zum Anfahren geeigneten Reibungskupplung (11), deren Eingangsglied (18) mit einer Ausgangswelle (14) eines Antriebsmotors drehfest verbunden ist, und einem Stufengetriebe (12), das eine Mehrzahl von N Radsätzen (28 - 36, 80; 28a-36a, 90, 92) entsprechend einer Mehrzahl von N Gangstufen (R, 1, 2, 3, 4, 5), eine erste Getriebeeingangswelle (16), die mit der Ausgangswelle (14) des Antriebsmotors drehfest verbunden ist, eine zweite Getriebeeingangswelle (22), die als Hohlwelle ausgebildet und mit dem Ausgangsglied (20) der Reibungskupplung (11) verbunden ist, eine Vorgelegewelle (26) und eine Getriebeausgangswelle (24) aufweist, wobei an der zweiten Getriebeeingangswelle (22) ein Rad (72) eines Radsatzes (70) zur Zugkraftunterstützung gelagert ist, der mit der Getriebeausgangswelle (24) in Verbindung bringbar ist, und wobei ein weiteres Rad (74) des Radsatzes (70) zur Zugkraftunterstützung an einer von der Vorgelegewelle (26) getrennten Nebenwelle (76) gelagert ist, die mit der Getriebeausgangswelle (24) in Verbindung steht oder in Verbindung bringbar ist, **dadurch gekennzeichnet, daß** das an der zweiten Getriebeeingangswelle (22) gelagerte Rad (72) ein Losrad (72) ist.

2. Antriebsstrang nach Anspruch 1, **dadurch gekennzeichnet, daß** das an der zweiten Getriebeeingangswelle (22) gelagerte Losrad (72) mittels einer ersten Schaltkupplung (68) mit der zweiten Getriebeeingangswelle (22) drehfest verbindbar ist und daß ferner die Vorgelegewelle (26) des Stufengetriebes (12) mittels der ersten Schaltkupplung (68) mit der zweiten Getriebeeingangswelle (22) verbindbar ist.

3. Antriebsstrang nach Anspruch 1 oder 2, **dadurch gekennzeichnet, daß** an der ersten Getriebeeingangswelle (16) ein Rad (62) eines Konstanten-Radsatzes (60) gelagert ist, das mit einem an der Vorgelegewelle (26) gelagerten Rad (64) kämmt.

4. Antriebsstrang nach Anspruch 3, **dadurch gekennzeichnet, daß** das Rad (62) des Konstanten-Radsatzes (60) als Losrad (62) ausgebildet ist und daß an der ersten Getriebeeingangswelle (16) eine zweite Schaltkupplung (66) gelagert ist, um das Losrad (62) drehfest mit der ersten Getriebeeingangswelle (16) zu verbinden.

5. Antriebsstrang nach Anspruch 2 und 4, **dadurch gekennzeichnet, daß** die erste und die zweite Schaltkupplung (68, 66) axial an gegenüberliegenden Seiten des Losrades (62) des Konstanten-Radsatzes angeordnet sind.

6. Antriebsstrang nach Anspruch 1 und 4, **dadurch gekennzeichnet, daß** die erste Schaltkupplung (68) zwischen den Losrädern (72, 62) angeordnet ist.

7. Antriebsstrang nach einem der Ansprüche 1 - 6, **dadurch gekennzeichnet, daß** ein Radsatz (80) für den höchsten, den zweithöchsten oder den dritthöchsten Gang die Nebenwelle (76) mit der Getriebeausgangswelle (24) verbindet.

8. Antriebsstrang nach Anspruch 7, **dadurch gekennzeichnet, daß** die Nebenwelle (76) mit der Getriebeausgangswelle (24) durch einen Radsatz (80) für den höchsten Gang, insbesondere den 5. Gang verbunden ist.

9. Antriebsstrang nach Anspruch 7 oder 8, **dadurch gekennzeichnet, daß** der Radsatz (80) für den höchsten, den zweithöchsten oder den dritthöchsten Gang benachbart zu der zweiten Schaltkupplung (66) angeordnet ist.

10. Antriebsstrang nach einem der Ansprüche 1 bis 6, **dadurch gekennzeichnet, daß** die Nebenwelle (76a) mittels wenigstens zweier Radsätze (90, 92) mit der Getriebeausgangswelle (24a) verbindbar ist.

11. Antriebsstrang nach Anspruch 10, **dadurch gekennzeichnet, daß** die zwei Radsätze (90, 92) den höchsten Gang und den dritthöchsten Gang darstellen.

12. Antriebsstrang nach Anspruch 10 oder 11, **dadurch gekennzeichnet, daß** die Radsätze (90, 92) über eine an der Nebenwelle (76a) gelagerte dritte Schaltkupplung (94) alternativ mit der Getriebeausgangswelle (24a) verbindbar sind.

13. Antriebsstrang nach einem der Ansprüche 10 - 12, **dadurch gekennzeichnet, daß** wenigstens einer der zwei Radsätze (90, 92) ein weiteres Losrad (102, 108) aufweist, das an der Vorgelegewelle (26a) gelagert und mittels einer vierten Schaltkupplung (96) mit der Vorgelegewelle (26a) drehfest verbindbar ist.

14. Antriebsstrang nach einem der Ansprüche 1 - 13, **gekennzeichnet durch** eine Steuervorrichtung (86) zur servomechanischen Ansteuerung von Kupplungen (11, 66, 68, 54, 56, 58) des Antriebsstranges (10) und ggf. zur Beeinflussung des Antriebsmotors.

## Claims

1. A drive train for a motor vehicle, said drive train (10) being suited to be automated, comprising a single friction clutch (11) being suited for starting said vehicle, an input member (18) of said friction clutch (11) being rotatably connected to an output shaft (14) of a driving motor, and a step transmission (12) that comprises a plurality of N gear sets (28 - 36, 80; 28a-36a, 90, 92) corresponding to a plurality of N speed steps (R, 1, 2, 3, 4, 5), a first transmission input shaft (16) rotatably connected to said output shaft (14) of said driving motor, a second transmission input shaft (22) which is formed as a hollow shaft and is connected with the output member (20) of said friction clutch (11), a counter shaft (26), and a transmission output shaft (24), wherein a gear (72) of a gear set (70) for traction force assistance is supported at said second transmission input shaft (22), said gear set (70) being connectable with said transmission output shaft (24), and wherein a further gear (74) of said gear set (70) for traction force assistance is supported at an auxiliary shaft (76) separate from said counter shaft (26), said auxiliary shaft (76) being connected with said transmission output shaft (24) or being connectable therewith, **characterized in that** the gear (72) supported at said second transmission input shaft (22) is an idler gear (72).

2. The drive train of claim 1, **characterized in that** said idler gear (72) supported at said second transmission input shaft (22) is rotatably connectable with said second transmission input shaft (22) via a first shift clutch (68), and that, further, said counter shaft (26) of said step transmission (12) is connectable with said second transmission input shaft (22) via said first shift clutch (68).

3. The drive train of claim 1 or 2, **characterized in that** a gear (62) of a constant gear set (60) is supported at said first transmission input shaft (16), wherein said gear (62) meshes with a gear (64) supported at said counter shaft (26).

4. The drive train of claim 3, **characterized in that** said gear (62) of said constant gear set (60) is an idler gear (62), and that a second shift clutch (66) is supported at said first transmission input shaft (16), in order to rotatably connect said idler gear (62) with said first transmission input shaft (16).

5. The drive train of claims 2 and 4, **characterized in that** said first and second shift clutches (68, 66) being arranged at axially opposite sides of said idler gear (62) of said constant gear set.

6. The drive train of claims 1 and 4, **characterized in that** said first shift clutch (68) is arranged between said idler gears (72, 62).

7. The drive train of any of claims 1 - 6, **characterized in that** a gear set (80) for the highest, the second highest or the third highest speed connects said auxiliary shaft (76) with said transmission output shaft (24).

8. The drive train of claim 7, **characterized in that** said auxiliary shaft (76) is connected with said transmission output shaft (24) via a gear set (80) for the highest speed, particularly the fifth speed.

9. The drive train of claim 7 or 8, **characterized in that** said gear set (80) for said highest, said second highest or said third highest speed is arranged adjacent to said second shift clutch (66).

10. The drive train of any of claims 1 to 6, **characterized in that** said auxiliary shaft (76a) is connectable with said transmission output shaft (24a) via at least two gear sets (90, 92).

11. The drive train of claim 10, **characterized in that** said two gear sets (90, 92) form said highest speed and said third highest speed.

12. The drive train of claim 10 or 11, **characterized in that** said gear sets (90, 92) are alternatively connectable to said transmission output shaft (24a) via a third shift clutch (94) that is supported at said auxiliary shaft (76a).

13. The drive train of any of claims 10 to 12, **characterized in that** at least one of said two gear sets (90, 92) comprises a further idler gear (102, 108) that is supported at said counter shaft (26a) and is rotatably connectable with said counter shaft (26a) via a fourth shift clutch (96).

14. The drive train of any of claims 1 - 13, **characterized by** control means (86) for servo-mechanically driving said clutches (11, 66, 68, 54, 56, 58) of said drive train (10), and optionally for taking influence on said driving motor.

## Revendications

1. Ligne d'entraînement automatisable (10) pour un véhicule à moteur, avec un seul embrayage à friction (11) approprié pour le démarrage, dont la bielle d'entrée (18) est raccordée de manière à résister à la torsion à un arbre de sortie (14) d'un moteur d'entraînement, et un engrenage réducteur (12) qui comporte une pluralité de N ensembles de roues (28 - 36, 80; 28a-36a, 90, 92) correspondant à une pluralité de N vitesses (R, 1, 2, 3, 4, 5), un premier arbre d'entrée de transmission (16), qui est raccordé de manière à résister à la torsion à l'arbre de sortie (14) du moteur d'entraînement, un second arbre d'entrée de transmission (22) qui est conçu comme un arbre creux et qui est raccordé à la bielle de sortie (20) de l'embrayage à friction (11), un arbre intermédiaire (26) et un arbre de sortie de transmission (24), ligne dans laquelle une roue (72) d'un ensemble de roues (70), qui peut être reliée à l'arbre de sortie de transmission (24), est logée dans le second arbre d'entrée de transmission (22) pour renforcer la force de traction, et dans laquelle une autre roue (74) de l'ensemble de roues (70), qui est reliée ou qui peut être reliée à l'arbre de sortie de transmission (24), est logée dans un arbre secondaire (76) séparé de l'arbre intermédiaire (26) pour renforcer la force de traction, **caractérisée en ce que** la roue (72) logée dans le second arbre d'entrée de transmission (22) est une roue folle (72).

2. Ligne d'entraînement selon la revendication 1, **caractérisée en ce que** la roue folle (72) logée dans le second arbre d'entrée de transmission (22) peut être reliée de manière à résister à la torsion au second arbre d'entrée de transmission (22) à l'aide d'un premier embrayage (68) et, en outre, **en ce que** l'arbre intermédiaire (26) de l'engrenage réducteur (12) peut être relié au second arbre d'entrée de transmission (22) à l'aide du premier embrayage (68).

3. Ligne d'entraînement selon la revendication 1 ou 2, **caractérisée en ce qu'**une roue (62) d'un ensemble de roues constantes (60), qui s'engrène à la manière d'un peigne dans une roue (64) logée dans l'arbre intermédiaire (26), est logée dans le premier arbre d'entrée de transmission (16).

4. Ligne d'entraînement selon la revendication 3, **caractérisée en ce que** la roue (62) de l'ensemble de roues constantes (60) est conçue comme une roue folle (62) et **en ce qu'**un deuxième embrayage (66) est logé dans le premier arbre d'entrée de transmission (16) pour lier en rotation la roue folle (62) et le premier arbre d'entrée de transmission (16).

5. Ligne d'entraînement selon les revendications 2 et 4, **caractérisée en ce que** le premier et le deuxième embrayage (68, 66) sont disposés dans le sens axial sur des côtés opposés de la roue folle (62) de l'ensemble de roues constantes.

6. Ligne d'entraînement selon les revendications 1 et 4, **caractérisée en ce que** le premier embrayage (68) est disposé entre les roues folles (72, 62).

7. Ligne d'entraînement selon l'une des revendications 1 à 6, **caractérisée en ce qu'**un ensemble de roues (80) pour la vitesse la plus élevée, la deuxième vitesse la plus élevée et la troisième vitesse la plus élevée relie l'arbre secondaire (76) à l'arbre de sortie de transmission (24).

8. Ligne d'entraînement selon la revendication 7, **caractérisée en ce que** l'arbre secondaire (76) est relié à l'arbre de sortie de transmission (24) par un ensemble de roues (80) pour la vitesse la plus élevée, en particulier pour la 5ème vitesse.

9. Ligne d'entraînement selon la revendication 7 ou 8, **caractérisée en ce que** l'ensemble de roues (80) pour la vitesse la plus élevée, la deuxième vitesse la plus élevée et la troisième vitesse la plus élevée est disposé au voisinage du deuxième embrayage (66).

10. Ligne d'entraînement selon l'une des revendications 1 à 6, **caractérisée en ce que** l'arbre secondaire (76a) peut être relié à l'arbre de sortie de transmission (24a) par au moins deux ensembles de roues (90, 92).

11. Ligne d'entraînement selon la revendication 10, **caractérisée en ce que** les deux ensembles de roues (90, 92) constituent la vitesse la plus élevée et la troisième vitesse la plus élevée.

12. Ligne d'entraînement selon la revendication 10 ou 11, **caractérisée en ce que** les ensembles de roues (90, 92) peuvent être reliés, en variante, à l'arbre de sortie de transmission (24a) par l'intermédiaire d'un troisième embrayage (94) logé dans l'arbre secondaire (76a).

13. Ligne d'entraînement selon l'une des revendications 10 à 12, **caractérisée en ce qu'**au moins l'un des deux ensembles de roues (90, 92) comporte une autre roue folle (102, 108) qui est logée dans l'arbre intermédiaire (26a) et qui peut être liée en rotation à l'arbre intermédiaire (26a) à l'aide d'un quatrième embrayage (96).

14. Ligne d'entraînement selon l'une des revendications 1 à 13, **caractérisée par** un dispositif de commande (86) pour la commande d'amorçage à servomécanisme des embrayages (11, 66, 68, 54, 56, 58) de la ligne d'entraînement (10) et, éventuellement, pour l'influence du moteur d'entraînement.
